# EUROPÄISCHE PATENTANMELDUNG

(11) **EP 1 752 421 A1**
(43) Veröffentlichungstag der Anmeldung: **14.02.2007**
(21) Anmeldenummer: 06016656.8
(22) Anmeldetag: 09.08.2006
(51) Int. Cl.: C02F 1/00, B01D 35/00, A47J 31/60

(54) **Vorrichtung zur Wasseraufbereitung**

(30) Priorität: 12.08.2005 DE 10538556
(71) Anmelder: Aquis Wasser-Luft-Systeme GmbH, Lindau, 9445 Rebstein (CH)
(72) Erfinder: Wawrla, Andreas, 9443 Widnau (DE)
(74) Vertreter: Roth, Klaus

(57) **Zusammenfassung**

Es wird eine Vorrichtung zur Wasseraufbereitung mittels einer Filterpatrone vorgeschlagen, die einen oberen Füllbehälter und einen durch eine Trennwand vom Füllbehälter getrennten, unteren Reinwasserbehälter.umfasst, wobei die Filterpatrone in den Reinwasserbehälter hineinragt und einen Deckel mit einer Zulaufleitung aus dem Füllbehälter in die Filterpatrone umfasst. Erfindungsgemäß soll eine derartige Vorrichtung dahingehend verbessert werden, dass der Einsatz einer Aufstromfilterpatrone ermöglicht wird. Dies wird erfindungsgemäß dadurch erreicht, dass die Filterpatrone (1) eine Fallleitung (9) für das Rohwasser umfasst, die mit der Zulaufleitung (15) des Deckels (5) verbunden ist.

## Beschreibung

Filterkannen zur Trinkwasseraufbereitung.sind bereits seit längerer Zeit Stand der Technik. So ist beispielsweise mit der Druckschrift DE 38 14 683 A1 eine Filterkanne bekannt geworden, bei der auf eine herkömmliche Wasserkanne ein trichterartiger Aufsatz aufgesetzt wird, der einen Füllbehälter und einen Auslaufstutzen aufweist, in den eine Filterpatronen eingesetzt wird. Die Filterpatrone weist in der Nähe des Deckels seitliche Sieböffnungen auf, durch die das Wasser einströmt und nach unten hin durch die Filterpatrone hindurchtritt.

Mit der Druckschrift DE 298 11 074 U1 ist eine Filterkanne mit Wasseraufbereitungsvorrichtung beschrieben, die eine Weiterentwicklung des vorgenannten Standes der Technik darstellt. Der wesentliche Unterschied besteht darin, dass der trichterförmige Aufsatz als Einsatz in die Kanne ausgebildet ist und ein Deckel mit Anzeigevorrichtung vorgesehen ist.

Bei den genannten Filterkannen durchläuft das Wasser mittels Schwerkraft den Filter im Abwärtsstrom und wird an der Unterseite in der Filterkanne gesammelt, wo es zum weiteren Gebrauch zur Verfügung steht. Diese Filter stehen in den Zeiträumen zwischen den Filtervorgängen in Kontakt mit der Umgebungsluft, wodurch eine Verkeimungsgefahr gegeben ist. Durch die Filterung im Abstromverfahren besteht weiterhin die Gefahr sogenannter Brückenbildungen innerhalb des Filterbettes, so dass keine gleichmäßige Filterung erfolgt. Weiterhin ergibt sich hierbei die Möglichkeit einer ungleichmäßigen Ausnutzung des Filtermaterials im Filterbett und entsprechender Verkürzung der Lebensdauer der Filterpatrone.

Zur Vermeidung dieser Nachteile ist mit der Druckschrift DE 199 15 933 A1 eine Filterpatrone vorgeschlagen worden, bei der ein zentrales Fallrohr zur Führung des Rohwassers in den Bodenbereich der Filterpatrone vorgesehen ist. Anschließend durchströmt das Wasser das Filterbett im Aufstrom und tritt durch randseitige Öffnungen am Filterpatronengehäuse aus. Über den Anschluss einer solchen Filterpatrone, z.B. für den Einsatz in einer Filterkanne mit Füllbehälter und Reinwasserbehälter, wird in dieser Druckschrift keine Aussage getroffen.

Aufgabe der Erfindung ist es daher, eine Vorrichtung zur Wasseraufbereitung mittels einer Filterpatrone vorzuschlagen, die den Einsatz einer Aufstromfilterpatrone bei einer solchen Filterkanne ermöglicht.

Diese Aufgabe wird ausgehend von dem einleitend genannten Stand der Technik durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend wird erfindungsgemäß in eine Vorrichtung zur Wasseraufbereitung eine Filterpatrone vorgesehen, die einen Deckel mit Zulaufleitung umfasst und die in montierter Position in den Reinwasserbehälter hineinragt. Die Filterpatrone umfasst eine Fallleitung und eine Fließstrecke im Aufstrom durch das Filterbett, wobei die Fallleitung mit der Zulaufleitung des Deckels verbunden ist.

Die Erfindung ermöglicht demnach den Einsatz von Filterpatronen, bei denen die Fließstrecke durch das Filterbett wenigstens teilweise im Aufstrom erfolgt. Der Einsatz derartiger Filterpatronen wird dadurch ermöglicht, dass die Fallleitung der Filterpatrone mit der Zulaufleitung im Deckel verbunden ist. Die Zulaufleitung im Deckel sorgt dafür, dass das Wasser aus dem Füllbehälter beim Eintritt in die Filterpatrone nicht unmittelbar in den Bereich des Filterbetts gelangt, der wenigstens teilweise im Aufstrom durchströmt werden soll, sondern zunächst in die Fallleitung geleitet wird. Durch diesen Aufbau ist zugleich eine einfache Montage der Filterpatrone möglich, indem durch Aufsetzen des Deckels sowohl der Zulauf aus dem Füllbehälter als auch die Verbindung zur Fallleitung hergestellt wird.

In einer Weiterbildung der Erfindung wird, bezogen auf die Strömungsrichtung vor der Fließstrecke im Aufstrom ein Trennelement zur Trennung von Wasser und Filtermaterial vorgesehen. Auf diese Weise kann unterhalb dieses Trennelements eine flächige Verteilung des zu filternden Wassers vorgenommen werden, so dass das zu filternde Wasser gleichmäßig über eine entsprechende Fläche in das Filterbett einströmen kann. Es wird gewissermaßen eine kleine Wasserkammer unterhalb des Filterbettes durch das Trennelement abgetrennt, wobei die Trennwand den genannten flächigen Einlass in das Filterbett darstellt.

Vorteilhafterweise wird die Fallleitung für das Rohwasser und das vor dem Eintritt in das Filterbett befindliche Trennelement als zusammenhängender Einsatz ausgebildet. Dies vereinfacht die Fertigung der Filterpatrone und insbesondere deren Montage. Vor dem Füllen des Filtergehäuses mit Filtermaterial muss in dieser Ausführungsform lediglich das aus Fallleitung und Trennelement bestehende Einsatzteil eingesetzt werden. Die Fallleitung, die beispielsweise als starres Rohr ausgebildet sein kann, kann dabei zugleich als Montagehilfe für das damit verbundene Trennelement dienen, so dass dieses problemlos auch im unteren Bereich der Filterpatrone montierbar ist. Um einen gewünschten Abstand zum Boden der Filterpatrone einzuhalten, kann ein entsprechender Anschlag, z.B. durch eine kleine Ringschulter an der Gehäusewand vorgesehen werden, der den Abstand des Trennelementes zum Boden vorgibt.

Das Trennelement kann dabei einstückig mit der Fallleitung gefertigt werden oder aber auch vor dem Einsetzen mit dieser zu einer zusammenhängenden Einheit verbunden werden. Nach dem Einsetzen dieser zusammenhängenden Einheit kann anschließend das Filtermaterial eingefüllt werden, das im Aufstrom durchströmt werden soll. In einer vorteilhaften Weiterbildung der Erfindung wird zudem ein Trennelement zur Trennung des Filtermaterials vom gefilterten Reinwasser vorgesehen werden.

Alle Trennelemente, die zur Trennung von Wasser und Filtermaterial angebracht werden, können beispielsweise als Siebe ausgebildet sein oder aus einem porösen, wasserdurchlässigen Material bestehen.

In einer besonderen Weiterbildung der Erfindung wird das obere Trennelement mit einem Verbindungselement versehen, das zur Verbindung der Fallleitung für das Rohwasser und der Zulaufleitung des Deckels dient. Auch durch diese Maßnahme wird die Montage der Filterpatrone erleichtert. Nach der Befüllung mit Filtermaterial kann durch Aufstecken des Trennelements mit Verbindungselement zum einen der Bereich des Filterbetts geschlossen und zum anderen die Fallleitung angeschlossen und fixiert werden. Das Verbindungselement kann dabei auch als Zentrierhilfe und Halterung für die Fallleitung im oberen Bereich ausgebildet sein.

In einer besonderen Ausführungsform kann das Verbindungselement als einfache Hülse ausgebildet sein, die auf die Fallleitung aufgesteckt wird.

Das obere Trennelement und das Verbindungselement zwischen Fallrohr und Zulaufleitung wird dabei bevorzugt wiederum als zusammenhängender Einsatz ausgebildet, der als Ganzes montierbar ist. Durch die Verwendung einer zusammenhängenden Einheit aus Trennelement und Verbindungselement wird die Montage der Filterpatrone erleichtert.

Dabei wird in einer vorteilhaften Ausführungsform das Verbindungselement und zugehörige Trennelement einstückig geformt. Eine Vormontage aus zwei getrennten Bauteilen, die miteinander verbunden werden, ist jedoch ebenfalls denkbar.

Vorteilhafterweise wird weiterhin eine Öffnung im Gehäuse der Filterpatrone zum Reinwasserbehälter hin vorgesehen. Hierbei ist in einer besonderen Ausführungsform eine Öffnung in der Seitenwand der Filterpatrone denkbar. Sie setzt jedoch voraus, dass anschließend an die Gehäusewand der Filterpatrone, zumindest im Bereich der Öffnung, kein geschlossener Trichterstutzen vorgesehen ist, wie dies bei bekannten Filterkannen der Fall ist. Es ist demnach im Bereich der Auslassöffnung entweder kein Trichterstutzen oder eine Öffnung in einem solchen Trichterstutzen oder aber ein Zwischenraum zwischen einem seitlich geschlossenen Trichterstutzen und wenigstens einem Teil der Außenwandung des Filtergehäuses vorzusehen, um einen Abfluss nach unten hin zu ermöglichen.

In einer besonders vorteilhaften Ausführungsform der Erfindung wird zur Führung des Reinwassers nach unten ein Reinwasserfallrohr in Strömungsrichtung hinter dem Trennelement zur Trennung von Reinwasser und Filtermaterial vorgesehen. Durch ein solches Reinwasserfallrohr kann eine definierte Strömung nach unten ausgebildet werden. Die Halterung der Filterpatrone ist dabei völlig frei in ihrer konstruktiven Ausgestaltung, insbesondere kann die Filterpatrone auch in einen umfangseitig geschlossenen Trichterstutzen eingesetzt werden.

Darüber hinaus kann bei Verwendung eines Reinwasserfallrohres der Querschnitt dieses Fallrohres so gewählt werden, dass wenigstens zeitweise eine siphonartige Sogwirkung auftritt. Diese siphonartige Sogwirkung kann den Durchfluss im Aufstrom durch die Filterpatrone unterstützen und somit für einen schnelleren und gleichmäßigeren Durchfluss sorgen.

In einer Weiterbildung dieser Ausführungsform wird der Einsatz mit dem Verbindungselement für das Fallrohr und die Zulaufleitung des Rohwassers mit einer Einlassöffnung für das Reinwasserfallrohr versehen. Auf diese Weise sind die oben angeführten Montagevorteile durch Verwendung eines Einsatzes für das Trennelement zur Abtrennung von Reinwasser aus dem Filtermaterial und zur Verbindung des Fallrohrs mit dem Wasserzulauf des Deckels in Kombination mit der Verwendung eines Fallrohrs für das gefilterte Reinwasser möglich.

Das Reinwasserfallrohr kann in einer besonders vorteilhaften Ausführungsform in das Gehäuse der Filterpatrone eingeformt werden. Hierdurch erübrigt sich eine separate Fertigung und Montage einer Rohrleitung zur Führung des Reinwassers nach unten.

In einer weiteren vorteilhaften Ausführungsform wird der Deckel der Filterpatrone mit einem Griff versehen, der den Füllbehälter in montiertem Zustand wenigstens teilweise durchsetzt. Durch einen solchen Griff wird die Handhabung der Filterpatrone beim Einsetzen sowie bei der Entnahme aus dem Füllbehälter erleichtert.

Darüber hinaus kann in einer besonderen Weiterbildung dieser Ausführungsform der Griff zur Nutzung weiterer Vorteile verwendet werden. So kann beispielsweise der Griff weitere Funktionseinheiten umfassen. Eine solche zusätzliche Funktionseinheit kann beispielsweise im Inneren des Griffes angeordnet werden, der hierzu mit einer Hohlkammer versehen wird. Als Funktionseinheit kann beispielsweise eine Sensoreinheit vorgesehen werden, die Zustandsparameter der Filterpatrone und/oder Qualitätsmerkmale des Roh- und/oder Reinwassers erfasst. Die Funktionseinheit kann auch die Arbeitsweise der Filterpatrone steuern. Eine solche Funktionseinheit könnte beispielsweise abhängig von Roh- und/oder Reinwasserhärte eine Verschnittmenge von Rohwasser in das gefilterte Reinwasser dosieren.

Andere Funktionseinheiten sind beispielsweise in Form von Dosiereinheiten denkbar, die dem Wasser Zusatzstoffe, z.B. zur gewünschten Mineralisierung oder Aromatisierung zusetzen.

Zur Ausbildung einer Sensoreinheit an einem Griff, z.B. mit Hohlkammer, können in einer bestimmten Ausführungsform Elektroden, z.B. in der Hohlkammer, vorgesehen werden, die in den Füllbehälter und/oder in die Filterpatrone hineinragen. Mit Hilfe solcher Elektroden ist über Ermittlung des jeweiligen Leitwerts beispielsweise eine Messung des Härtegrades des Roh- und/oder gefilterten Reinwassers möglich.

Gegebenenfalls könne in einen solchen Griff und/oder den daran angeschlossenen Deckel auch Kanäle ausgebildet werden, die die Zugabe von Rohwasser in das gefilterte Reinwasser zur Einstellung der Reinwasserhärte ermöglicht. In einer Weiterbildung dieser Ausführungsform werden zusätzliche Dosierelemente zur Einstellung der zudosierten Rohwassermenge vorgesehen.

Der Griff der Filterpatrone kann auch als Betätigungselement für Funktionseinheiten ausgebildet werden. So kann beispielsweise der Griff mit einer mechanischen Dosiereinheit für die zur Dosierung von Rohwasser in das gefilterte Reinwasser verbunden sein. Durch eine entsprechende Betätigung des Griffes, z.B. mittels einer Drehbewegung, kann eine solche Verschnittmenge einstellbar ausgebildet werden. Auch andere Funktionen können über die Betätigung des Griffes wahrgenommen werden.

Eine Anpassung der Filtervorrichtung an die vorgesehenen Wasserhärten des Roh- und/oder Reinwassers können beispielsweise auch durch eine Anpassung des Querschnitts in der Zulaufleitung und somit durch die Verweildauer des Wassers im Filterbett bei Durchströmung der Filterpatronen ausgebildet werden.

Der Griff der Filterpatronen kann darüber hinaus eine Anzeige umfassen, um der Bedienperson verschiedene Werte anzuzeigen. So könnte beispielsweise eine Anzeige des Erschöpfungszustandes der Filterpatrone vorgesehen sein. Diese Anzeige kann zeitabhängig, z.B. unter Berücksichtigung der vor Ort angetroffenen Rohwasserhärte oder aber auch über die sensorische Ermittlung der Filterbelastung arbeiten. Auch eine Bestimmung des Erschöpfungsgrades über die gefilterten Wassermengen unter Berücksichtigung der entsprechenden Roh- und Reinwasserhärten ist denkbar.

Ein Ausführungsbeispiel der Erfindung ist in der Zeichnung dargestellt und wird anhand der Figuren nachfolgend näher erläutert.

Im Einzelnen zeigen
- Figur 1: eine Schnittdarstellung durch eine Filterpatrone für eine erfindungsgemäße Vorrichtung zur Wasseraufbereitung,
- Figur 2: eine Schnittdarstellung entsprechend Figur 1, wobei die Schnittachse quer zur Schnittachse gemäß Figur 1 angeordnet ist,
- Figur 3: eine Ausschnittvergrößerung aus Figur 2,
- Figur 4: eine perspektivische Darstellung einer teilweise montierten Filterpatrone,
- Figur 5: ein Ausschnitt aus einer perspektivischen Schnittdarstellung einer Vorrichtung gemäß den vorgenannten Figuren,
- Figur 6: eine weitere Ausschnittsvergrößerung einer perspektivischen Schnittdarstellung mit quer zur Schnittachse von Figur 5 verlaufenden Schnittachse und
- Figur 7: eine perspektivische Ausschnittsdarstellung des Bodenbereichs einer Vorrichtung gemäß den vorgenannten Figuren.

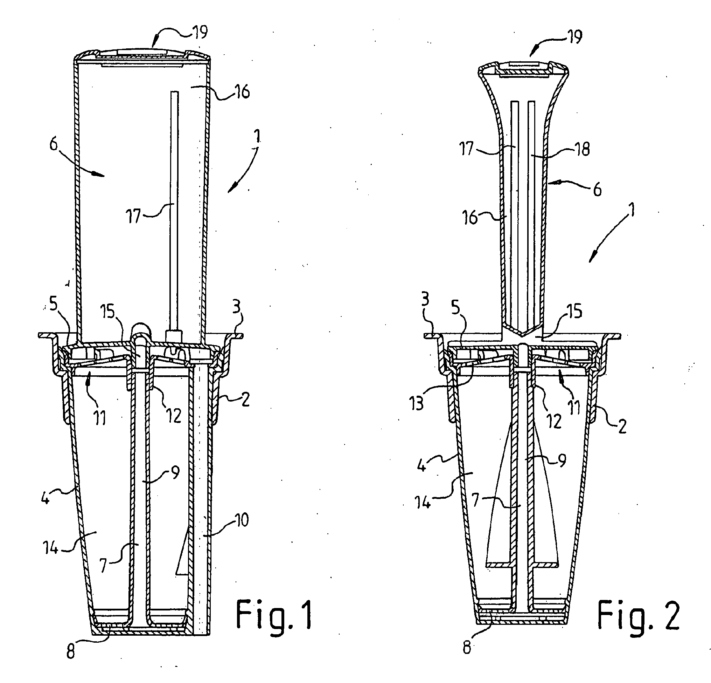

Figur 1 zeigt eine Filterpatrone 1, die in einen Aufnahmestutzen 2 eines nicht vollständig dargestellten Füllbehälters eingesetzt ist. Der Boden des Füllbehälters ist durch die obere Abkantung 3 des Aufnahmestutzens 2 angedeutet. Die Abkantung 3 setzt sich entsprechend der Ausformung des Füllbehälters auf nicht näher dargestellte Weise fort. Der Füllbehälter kann dabei entsprechend bekannten Filterkannensystemen ausgebildet sein.

Die Filterpatrone 1 umfasst ein Patronengehäuse 4, das mit einem Deckel 5 verschlossen ist. An den Deckel 5 ist ein Griff 6 angeformt.

In das Patronengehäuse 4 ist ein unterer Einsatz 7 eingesetzt, der ein unteres Trennelement 8 in Form eines Trennsiebes und ein daran angeformtes Fallrohr 9 für eintretendes Rohwasser aufweist. In das Patronengehäuse 4 ist eine Reinwasserfallleitung 10 eingeformt.

Weiterhin ist ein oberer Einsatz 11 in das Patronengehäuse 4 eingesetzt. Der obere Einsatz 11 umfasst ein Verbindungselement 12 zum Anschluss und zur Fixierung des Fallrohres 9 des unteren Einsatzes 7. Darüber hinaus ist der obere Einsatz 11 mit einem oberen Trennelement 13 versehen, so dass sich zwischen dem oberen Trennelement 13 und dem unteren Trennelement 8 eine Filterkammer 14 zur Aufnahme von Filtermaterial und somit zur Bildung des Filterbettes ergibt.

Der Deckel 5 umfasst eine Zulaufleitung 15, die einerseits in das Verbindungselement 12 und somit in das Fallrohr 9 mündet und andererseits gegenüber dem Bereich des Füllbehälters oberhalb des Aufnahmestutzens 2 offen ist.

Der an den Deckel 5 angeförmte Griff 6 umfasst eine Hohlkammer 16, in die zwei Elektroden 17, 18 eingesetzt sind. Darüber hinaus umfasst der Griff 6 eine Anzeigeeinheit 19, um einer Bedienperson verschiedene Informationen anzuzeigen, z.B. den Härtegrad des Reinwassers oder den Zustand der Filterpatrone.

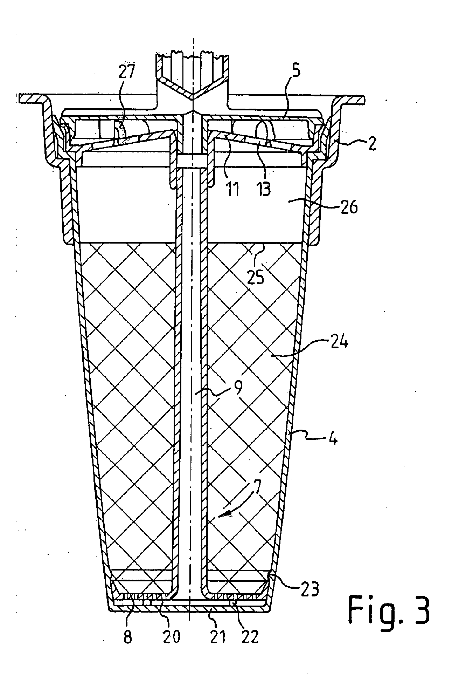

In Figur 3 ist der untere Bereich der Filterpatrone vergrößert dargestellt. Auf diese Weise ist erkennbar, dass sich unterhalb des unteren Trennelementes 8 eine kleine Verteilerkammer 20 für das durch das Fallrohr 9 einströmende Wasser bildet, da der aus Fallrohr 9 und Trennelement 8 gebildete untere Einsatz 7 ein wenig vom Boden 21 des Patronengehäuses 4 beabstandet ist. Zur Einstellung dieses Abstandes sind in dieser Ausführungsform bodenseitig Anschläge 22 angebracht. In der Seitenwand ist eine kleine Ringnase 23 eingeformt, so dass der untere Einsatz 7 beim Einsetzen in das Gehäuse 4 einrasten kann.

In der Darstellung gemäß Figur 3 ist die Füllung von Filtermaterial 24 bis zu einem Füllpegel 25 erkennbar. Oberhalb des Füllpegels 25 ist in der Filterkammer 26 bis zum oberen Trennelement 13 ein Aufschwemmbereich vorgesehen, der dem Filtermaterial 24 im Betrieb die Möglichkeit der Ausdehnung während des Aufschwemmens durch das durchströmende Wasser gibt.

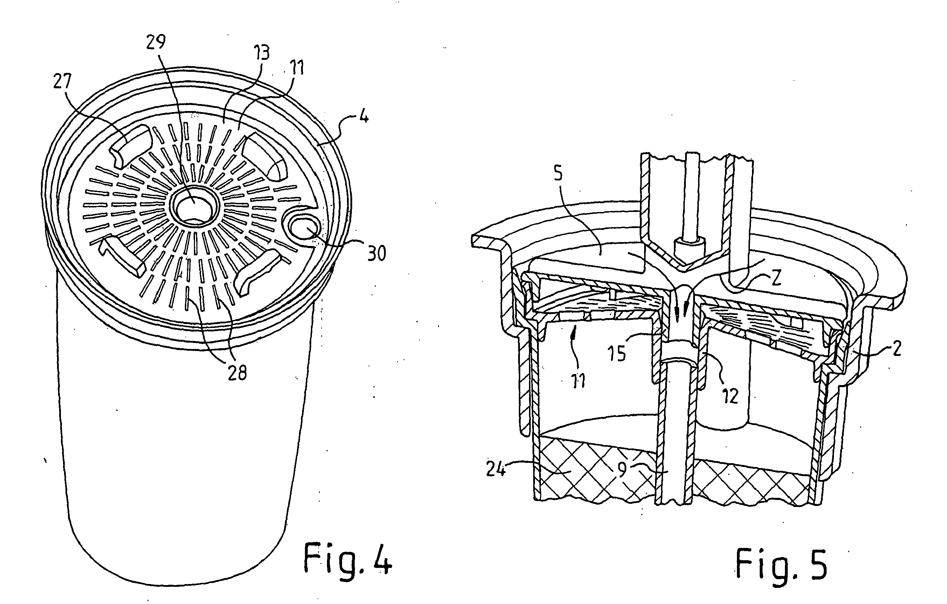

Weiterhin sind in Figur 3 Befestigungselemente 27 erkennbar, die einerseits am oberen Einsatz 11 und andererseits am Deckel 5 angebracht sind und die dazu dienen, den Deckel 5 und den oberen Einsatz 11 zu verbinden. Die Darstellung gemäß Figur 4 zeigt eine perspektivische Draufsicht auf den oberen Einsatz 11 in eingesetztem Zustand in das Patronengehäuse 4. Neben den Siebschlitzen 28 des oberen Trennelementes 13 ist die Anordnung und Ausbildung der Befestigungselemente 27 in dieser Darstellung gut erkennbar. Auch die zentrale Aufnahmeöffnung 29, die zum Einführen der Zulaufleitung des Deckels 5 dient, ist in dieser Darstellung ebenso gut sichtbar, wie die Durchlassöffnung 30, die die Reinwasserfallleitung für das durch das obere Trennelement 13 vom Filtermaterial getrennte Reinwasser zugänglich macht.

Figur 5 veranschaulicht in vergrößerter Darstellung die Verbindung des Fallrohres 9 mit der Zulaufleitung 15 des Deckels 5 über das Verbindungselement 12 des oberen Einsatzes 11. Der Wasserzulauf ist durch zwei Pfeile Z angedeutet.

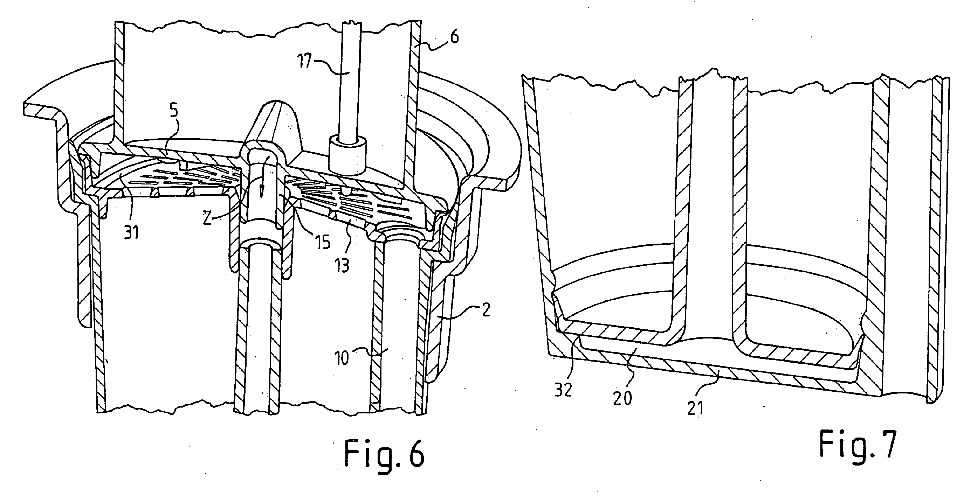

Figur 6 zeigt den in Figur 5 dargestellten Ausschnitt mit anderer Schnittebene, wobei in dieser Ansicht der Verlauf der Zulaufleitung 15 gut erkennbar ist. Weiterhin ist in dieser Darstellung ersichtlich, dass sich die in der dargestellten Hälfte des Griffs 6 befindliche Elektrode 17 durch den Deckel 5 hindurch in die oberhalb des oberen Trennelementes 13 angeordnete Reinwasserkammer 31 erstreckt. Eine derart angeordnete Elektrode dient demnach dazu, Messungen im gefilterten Reinwasser, z.B. zur Bestimmung des Härtegrades des Reinwassers, vorzunehmen.

In der vergrößerten Darstellung gemäß Figur 7 ist die Verteilerkammer 20 hervorgehoben, wobei in dieser Darstellung beispielhaft ein randseitiger Anschlag 32 für die Beabstandung des unteren Trennelementes 8 vom Boden 21 vorgesehen ist.

Die Montage einer erfindungsgemäßen Filterpatrone lässt sich durch einfaches Zusammenstecken der verschiedenen Bauelemente bewerkstelligen. In das Patronengehäuse 4 wird zunächst der untere Einsatz 7 bis zur Verrastung eingesetzt. Anschließend kann das Filtermaterial 24 bis zum Füllpegel 25 aufgefüllt werden. Der obere Einsatz 11 wird anschließend aufgesetzt und geeignet verbunden, gegebenenfalls verschweißt.

Anschließend kann der Griff 6 gemeinsam mit dem Deckel 5 über die Befestigungselemente 26, 27, z.B. in Form eines Bajonettverschlusses, befestigt werden.

Die lösbare Anordnung des Deckels 5 mit Griff 6 ermöglicht die Wiederverwendung des Deckels 5 mit Griff 6 und somit auch die Wiederverwendung der dort angeordneten Funktionseinheit, beispielsweise einer Sensoreinheit mit Elektroden 17, 18 sowie einer Anzeigeeinheit 19, beim Austausch der Patrone.

Die Montage der erfindungsgemäßen Filterpatrone ist demnach besonders leicht zu bewerkstelligen, wobei dennoch eine Fließstrecke durch das Filtermaterial 24 vorhanden ist, die wenigstens teilweise im Aufstrom ausgebildet ist.

Die so montierte Filterpatrone kann wie bekannte Abstromfiltereinsätze in einen Aufnahmestutzen 2, beispielsweise eines Füllbehälters einer Filterkanne, von oben unter Benutzung des Griffes 6 eingesetzt werden. Nach Befüllung des Füllbehälters oberhalb der Abkantung 3, die in den Boden des Füllbehälters übergeht, gelangt das Wasser durch die Zulauföffnung 15 und das Verbindungselement 12 in das Fallrohr 9, wo es nach unten in die Verteilerkammer 20 fließt. In der Verteilerkammer 20 verteilt sich das Wasser über den gesamten Patronenquerschnitt, bevor es durch das untere Trennelement 8 in die mit Filtermaterial 24 gefüllte Filterkammer 26 gelangt. Die Filterkammer 26 wird sodann im Aufstrom vom Wasser durchströmt, wobei das Filtermaterial 24 aufgeschwemmt wird, so dass sich das Gemisch aus Filtermaterial und Wasser bis in den Raum oberhalb des Füllpegels 25 hin ausdehnen kann. Das Filtermaterial wird durch das obere Trennelement 13 zurückgehalten, so dass schließlich nur gefiltertes Reinwasser in die Reinwasserkammer 31 gelangt. Dort kann in den dargestellten Ausführungsbeispielen das Reinwasser z.B. nach Härtegrad oder anderen Parametern vermessen werden. Durch die Durchlassöffnung 30 gelangt das Reinwasser anschließend in die Reinwasserfallleitung 10, durch die das Reinwasser nach unten in den nicht näher dargestellten Reinwasserbehälter der Wasseraufbereitungsvorrichtung abfließt.

Der Fluss des Wassers kann dabei vollständig durch Gravitation erfolgen. Durch entsprechende Querschnittsausbildung der Reinwasserfallleitung 10 kann die Strömung durch eine siphonartige Sogwirkung verbessert werden.

Durch die Anordnung des Strömungsverlaufs im Aufstrom bzw. durch den Überlauf, der sich durch die obere Durchlassöffnung 30 ergibt, ist gewährleistet, dass das Filtermaterial 24 dauerhaft unter Wasser steht und somit nicht austrocknen oder mit Luft in Berührung kommt. Durch die Fließstrecke im Aufstrom werden weiterhin Bettverdichtungen oder dauerhafte Durchbrüche durch das Filtermaterial verhindert. Durch die Strömung wird das Filtermaterial stets gleichmäßig aufgeschwemmt und somit eine gute Kontaktfläche und Kontaktdauer für das zu filternde Wasser gewährleistet.

### Bezugszeichenliste:

- 1: Filterpatrone
- 2: Aufnahmestutzen
- 3: Abkantung
- 4: Patronengehäuse
- 5: Deckel
- 6: Griff
- 7: unterer Einsatz
- 8: unteres Trennelement
- 9: Fallrohr
- 10: Reinwasserfallleitung
- 11: oberer Einsatz
- 12: Verbindungselement
- 13: oberes Trennelement
- 14: Filterkammer
- 15: Zulaufleitung
- 16: Hohlkammer
- 17: Elektrode
- 18: Elektrode
- 19: Anzeigeeinheit
- 20: Verteilerkammer
- 21: Boden
- 22: Anschlag
- 23: Ringnase
- 24: Filtermaterial
- 25: Füllpegel
- 26: Filterkammer
- 27: Befestigungselemente
- 28: Siebschlitze
- 29: Aufnahmeöffnung
- 30: Durchlassöffnung
- 31: Reinwasserkammer

## Patentansprüche

1. Vorrichtung zur Wasseraufbereitung mittels einer Filterpatrone, die einen oberen Füllbehälter und einen durch eine Trennwand vom Füllbehälter getrennten, unteren Reinwasserbehälter umfasst, wobei die Filterpatrone in den Reinwasserbehälter hineinragt und einen Deckel mit einer Zulaufleitung aus dem Füllbehälter in die Filterpatrone umfasst, **dadurch gekennzeichnet, dass** die Filterpatrone (1) eine Fallleitung (9) für das Rohwasser umfasst, die mit der Zulaufleitung (15) des Deckels (5) verbunden ist.

2. Vorrichtung nach einem der vorgenannten Ansprüche **dadurch gekennzeichnet, dass** eine Fließstrecke durch das Filterbett (24) im Aufstrom vorgesehen ist.

3. Vorrichtung nach einem der vorgenannten Ansprüche, **dadurch gekennzeichnet, dass** bezogen auf die Strömungsrichtung vor der Fließstrecke im Aufstrom ein Trennelement (8) zur Trennung von Wasser und Filtermaterial (24) vorgesehen ist.

4. Vorrichtung nach einem der vorgenannten Ansprüche, **dadurch gekennzeichnet, dass** die Fallleitung (9) für das Rohwasser und das vor dem Eintritt ins Filterbett befindliche Trennelement (8) als zusammenhängender Einsatz ausgebildet ist.

5. Vorrichtung nach einem der vorgenannten Ansprüche **dadurch gekennzeichnet, dass** ein Trennelement (13) zur Trennung des Filtermaterials (24) vom gefilterten Reinwasser vorgesehen ist.

6. Vorrichtung nach einem der vorgenannten Ansprüche, **dadurch gekennzeichnet, dass** das Trennelement (13) zur Trennung des Filtermaterials von gefilterten Reinwasser ein Verbindungselement (12) zur Verbindung der Fallleitung (9) für das Rohwasser und die Zulaufleitung (15) des Deckels (5) umfasst.

7. Vorrichtung nach einem der vorgenannten Ansprüche, **dadurch gekennzeichnet, dass** das Trennelement (13) zur Trennung des Reinwassers vom Filtermaterial (24) und das Verbindungselement (12) zwischen Fallrohr (9) und Zulaufleitung (15) als zusammenhängender Einsatz ausgebildet ist.

8. Vorrichtung nach einem der vorgenannten Ansprüche **dadurch gekennzeichnet, dass** eine Öffnung im Gehäuse der Filterpatrone zum Reinwasserbehälter hin vorgesehen ist.

9. Vorrichtung nach einem der vorgenannten Ansprüche **dadurch gekennzeichnet, dass** ein Reinwasserfallrohr (10) in Strömungsrichtung hinter dem Trennelement (13) vorgesehen ist.

10. Vorrichtung nach einem der vorgenannten Ansprüche **dadurch gekennzeichnet, dass** der Querschnitt des Reinwasserfallrohrs (10) so gewählt ist, dass wenigstens zeitweise eine siphonartige Sogwirkung auftritt.

11. Vorrichtung nach einem der vorgenannten Ansprüche, **dadurch gekennzeichnet, dass** der Einsatz (11) mit Verbindungselement (12) für Fallrohr (9) und Zulaufleitung (15) eine Einlassöffnung (30) für das Reinwasserfallrohr (10) umfasst.

12. Vorrichtung nach einem der vorgenannten Ansprüche, **dadurch gekennzeichnet, dass** das Reinwasserfallrohr (10) in das Gehäuse der Filterpatrone (1) eingeformt ist.

13. Vorrichtung nach einem der vorgenannten Ansprüche **dadurch gekennzeichnet, dass** der Deckel (5) einen Griff (6) umfasst, der den Füllbehälter wenigstens teilweise durchsetzt.

14. Vorrichtung nach einem der vorgenannten Ansprüche **dadurch gekennzeichnet, dass** der Griff (6) eine Hohlkammer (16) aufweist und wenigstens eine Funktionseinheit (17, 18) in der Hohlkammer (16) angeordnet ist.

15. Vorrichtung nach einem der vorgenannten Ansprüche **dadurch gekennzeichnet, dass** die Funktionseinheit Sensorelemente (17, 18) umfasst.

16. Vorrichtung nach einem der vorgenannten Ansprüche **dadurch gekennzeichnet, dass** in der Hohlkammer (16) Elektroden (17, 18) angeordnet sind, die in die Filterpatrone hineinragen.

17. Vorrichtung nach einem der vorgenannten Ansprüche **dadurch gekennzeichnet, dass** der Griff (6) der Filterpatrone (1) eine Anzeigeeinheit (19) umfasst.
